# EUROPÄISCHE PATENTSCHRIFT

(11) **EP 2 033 701 B1**
(45) Veröffentlichungstag und Bekanntmachung des Hinweises auf die Patenterteilung: **21.03.2012**
(21) Anmeldenummer: 08162963.6
(22) Anmeldetag: 26.08.2008
(51) Int. Cl.: B01D 29/46

(54) **Brunnenfilter**
Fountain filter
Filtre de puits

(30) Priorität: 08.09.2007 DE 202007012613 U
(43) Veröffentlichungstag der Anmeldung: 11.03.2009
(73) Patentinhaber: Stüwa Konrad Stükerjürgen GmbH, 33397 Rietberg (DE)
(72) Erfinder: Stükerjürgen, Ralf, 33397, Rietberg (DE)
(74) Vertreter: Dantz, Jan Henning

(56) Entgegenhaltungen:
- DE-A1- 1 807 913
- US-A- 4 752 394

## Beschreibung

Die vorliegende Erfindung betrifft einen Brunnenfilter, bestehend aus einer Vielzahl von auf in Achsrichtung des Brunnenfilters verlaufenden Zugstangen aufgeschobenen, ringförmigen Filterscheiben aus Kunststoff.

Brunnenfilter der vorerwähnten Art sind an sich bekannt.

Bei den bekannten Brunnenfiltern sind die Filterscheiben so gestaltet, dass jeweils paarweise aneinander liegende Filterscheiben zur Innenseite des Brunnenfilters hin sich konisch erweiternde Wassereintrittsöffnungen bilden. Durch diese sich konisch erweiternden Filteröffnungen wird der Vorteil erzielt, dass entsprechende Brunnenfilter besonders gut zu entsanden und zu regenerieren sind.

Diese Vorteile werden auch durch in der Branche bekannte, sogenannte Wickeldrahtfilter erzielt.

Die DE 1 807 913 offenbart einen Filterkörper, der eine Vielzahl von Stäben umfasst, um ein Draht gewickelt ist. Die Stäbe und der Draht bestehen aus AcrylnitrilButadien-Styrol und können miteinander zu einer Einheit verschmolzen sein.

Bei manchen Einsatzgebieten, beispielsweise im Braunkohlebergbau, ist ein Wickeldrahtfilter allerdings nur begrenzt einsetzbar, da Brunnenfilter in solchen Einsatzbereichen abbaggerbar sein müssen, was bei Wickeldrahtfiltem nicht ohne weiteres gegeben ist, da sich das Wickelprofil in Förderbändern und anderen Transportaggregaten verhaken und somit zu kostenintensiven Störungen bei der Entsorgung führen kann.

Demgegenüber haben Brunnenfilter mit Filterscheiben den Vorteil, dass beim Abbaggern der Filterscheiben saubere Bruchkanten entstehen, da die einzelnen Filterscheibenfilter nur zusammengesteckt und nicht untereinander fest miteinander verbunden sind.

Bislang hat man zur Bildung entsprechender Brunnenfilter Filterscheiben aus Polyvenylchlorid (PVC) oder vergleichbaren Kunststoffen verwendet, welche die verschiedensten, an Brunnenfilter gestellten Ansprüche aber nicht umfassend zufrieden stellen können.

Die US 4 752 394 offenbart einen Spaltfilter mit einer Vielzahl von Ringscheiben aus Kunststoff, die stapelförmig aufeinander angeordnet sind. Die Ringscheiben sind dabei aus faserverstärktem Polypropylen hergestellt.

Der vorliegenden Erfindung liegt deshalb die Aufgabe zugrunde, einen Brunnenfilter der gattungsgemäßen Art zu schaffen, der in nahezu idealer Weise alle Anforderungen an einen Brunnenfilter zu erfüllen in der Lage ist.

Diese Aufgabe wird erfindungsgemäß dadurch gelöst, dass die Filterscheiben aus durchsichtigem Styrol-Acrylnitril (SAN) hergestellt sind.

Es hat sich überraschenderweise herausgestellt, dass die Verwendung dieses Kunststoffes für die Herstellung von Filterscheiben eines Brunnenfilters äußerst zweckmäßig und praxisgerecht ist. Insbesondere ist die Festigkeit der aus Styrol-Acrylnitril (SAN) gefertigten Filterscheiben sehr hoch, so dass stabile und hochbelastbare Brunnenfilter aus entsprechenden Filterscheiben aufgebaut werden können.

Erfindungsgemäß ist vorgesehen, dass die Filterscheiben aus einem durchsichtigen Styrol-Acrylnitril (SAN) gefertigt sind.

Dies bietet den Vorteil, dass nach dem Einbau eines entsprechenden Brunnenfilters in ein Bohrloch mittels einer in den Brunnenfilter eingelassenen Kamera von innen eine den Brunnenfilter umgebende äußere Kiesschüttung kontrolliert und festgestellt werden kann, ob sich die äußere Kiesschüttung gleichmäßig im Ringraum zwischen einem Bohrloch und dem Äußeren des Brunnenfilters verteilt hat. Außerdem kann die Lage der Zentrierung des Brunnenfilters im Bohrloch ermittelt werden.

Eine insbesondere unter dem Gesichtspunkt der Belastbarkeit vorteilhafte Weiterentwicklung der Erfindung sieht vor, dass die Filterscheiben aus Styrol-Acrylnitril (SAN) mit die Festigkeit erhöhenden Zuschlagstoffen, insbesondere in Form von Glasfasern, hergestellt sind.

Hierdurch kann auf einfache Art und Weise die ohnehin schon hohe Festigkeit der Filterscheiben drastisch erhöht werden, so dass die Außendruckfestigkeit des Brunnenfilters deutlich verbessert wird.

In den beigefügten Zeichnungen ist ein Ausführungsbeispiel der Erfindung dargestellt, welches im folgenden näher beschrieben wird.

Es zeigen:
- Figur 1: eine schematische Darstellung eines erfindungsgemäßen Brunnenfil- ters
- Figur 2: eine Ansicht einer Filterscheibe des Brunnenfilters gemäß Figur 1
- Figur 3: einen Schnitt nach der Linie III-III in Figur 2
- Figur 4: eine vergrößerte Darstellung der in Figur 3 mit IV bezeichneten Ein- zelheit
- Figur 5: einen Schnitt nach der Linie V-V in Figur 2.

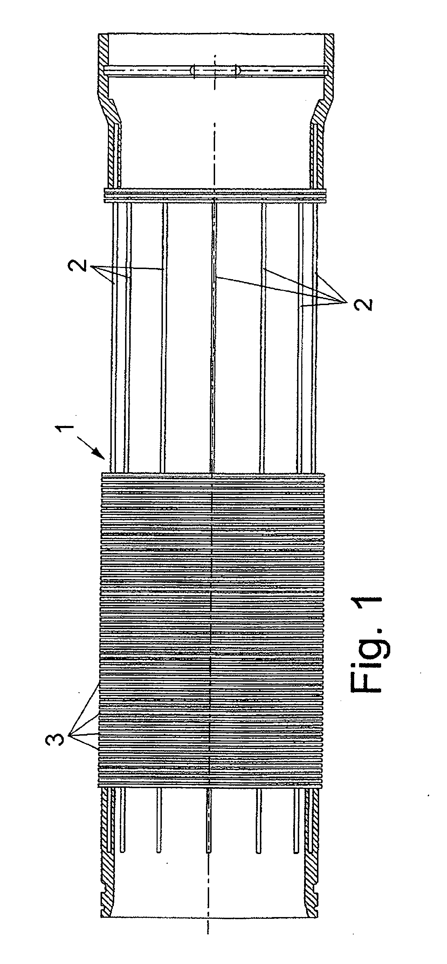

In Figur 1 ist mit dem Bezugszeichen 1 insgesamt ein Brunnenfilter bezeichnet, der im wesentlichen aus einer Vielzahl von auf in Achsrichtung des Brunnenfilters 1 verlaufenden Zugstangen 2 aufgeschobenen, ringförmigen Filterscheiben 3 aus Kunststoff besteht.

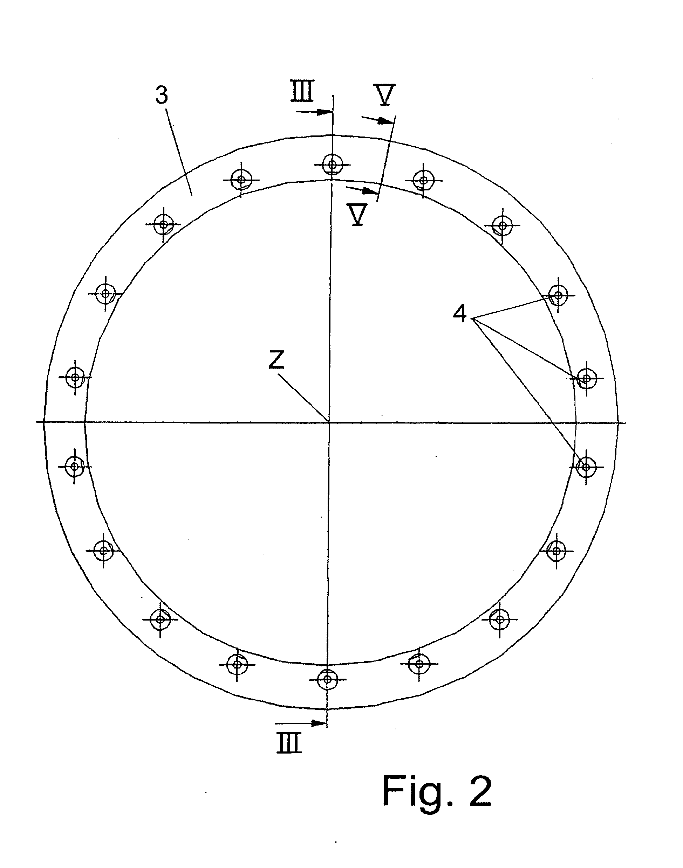

Eine derartige Filterscheibe 3 ist in den Figuren 2 bis 5 dargestellt.

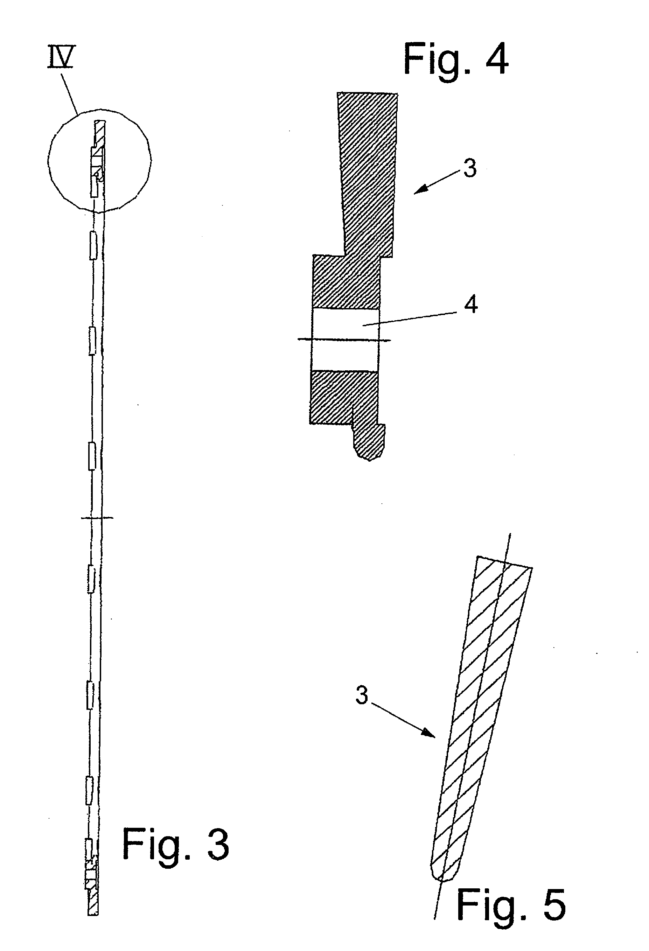

Jede Filterscheibe 3 weist eine Vielzahl von achsparallelen Durchgangsbohrungen 4 auf, durch welche entsprechend dimensionierte Zugstangen 2 hindurchgesteckt werden können. In dem Bereich zwischen den achsparallelen Bohrungen 4 ist, was Figur 5 sehr deutlich macht, der Querschnitt der Filterscheiben 3 zum Zentrum "Z" (siehe Figur 2) hin gerichtet konisch verjüngt, so dass sich Filterdurchlässe ergeben, die sich zur Mitte des Brunnenfilters 1 hin gesehen erweitern.

Die einzelnen Filterscheiben 3 sind aus Styrol-Acrylnitril (SAN) hergestellt, einem Kunststoff, der sich für den vorliegenden Anwendungsfall hervorragend eignet. Die Filterscheiben 3 können dabei bevorzugt aus einem durchsichtigen Styrol-Acrylnitril (SAN) hergestellt sein, so dass beispielsweise durch eine in den Brunnenfilter 1 eingelassene Kamera der Ringraum außerhalb des Brunnenfilters 1 kontrolliert werden kann. So kann beispielsweise eine zwischen der Außenfläche des Brunnenfilters 1 und einem entsprechend großen Bohrloch eingefüllte Kiesschüttung beobachtet und kontrolliert werden. Es kann auch die Lage der Zentrierung des Brunnenfilters 1 innerhalb eines Bohrloches ermittelt werden.

Es ist auch denkbar, zur Erhöhung der Festigkeit des gesamten Brunnenfilters 1 das Styrol-Acrylnitril (SAN) mit festigkeitserhöhenden Zusätzen, beispielsweise Glasfasern, zu versehen, wodurch Filterscheiben 3 mit sehr hoher Festigkeit erhalten werden.

Sofern Glasfasern als festigkeitserhöhende Zusatzmittel Verwendung finden, ist vorgesehen, dass der Glasfaseranteil etwa 20 bis 40% beträgt.

Bevorzugt sind die Filterscheiben 3 im Spritzgießverfahren hergestellt, wodurch speziell bei der Verwendung von Styrol-Acrylnitril (SAN) Filterscheiben 3 mit einer sehr glatten Oberfläche erhalten werden.

Dies ist insofern besonders vorteilhaft, weil glatte Oberflächen geringe Turbulenzen hervorrufen und somit der Bildung von Inkrustrationen vorgebeugt wird. Inkrustrationen sind z.B. Eisen- und Mangan-Ablagerungen, die schneller in Verwirbelungszonen entstehen und die letztlich dazu führen, dass sich die Filteröffnungen eines Brunnenfilters 1 zusetzen, was relativ teure mechanische und chemische Regenerierungsmaßnahmen verursacht.

Eine Erhöhung der Oberflächenqualität im Sinne einer deutlichen Herabsetzung der Oberflächenrauigkeit kann auch durch spezielle Oberflächenbehandlungsmethoden, z.B. durch die Nano-Technologie erfolgen.

Durch die Verwendung von Styrol-Acrylnitril (SAN) für die Herstellung der Filterscheiben 3 wird also eine Reihe von Vorteilen erzielt, die mit Filterscheiben beispielsweise aus Polyvenylchlorid (PVC) nicht erzielbar sind.

## Patentansprüche

1. Brunnenfilter (1), bestehend aus einer Vielzahl von auf in Achsrichtung des Brunnenfilters (1) verlaufenden Zugstangen (2) aufgeschobenen, ringförmigen Filterscheiben (3) aus Kunststoff, **dadurch gekennzeichnet, dass** die Filterscheiben (3) aus durchsichtigem Styrol-Acrylnitril (SAN) hergestellt sind.

2. Brunnenfilter nach Anspruch 1, **dadurch gekennzeichnet, dass** die Filterscheiben (3) im Spritzgussverfahren hergestellt sind.

3. Brunnenfilter nach Anspruch 1 oder 2, **dadurch gekennzeichnet, dass** die Filterscheiben (3) durch bekannte und geeignete Methoden, z.B. durch Nano-Technik mit einer besonders glatten Oberfläche ausgestattet sind.

## Claims

1. Well filter (1), comprising a multiplicity of annular plastic filter discs (3) pushed onto tie rods (2) running in the axial direction of the well filter (1), **characterized in that** the filter discs (3) are produced from transparent styrene acrylonitrile (SAN).

2. Well filter according to Claim 1, **characterized in that** the filter discs (3) are produced by the injection-moulding process.

3. Well filter according to Claim 1 or 2, **characterized in that** the filter discs (3) are provided with a particularly smooth surface by known, suitable methods, for example by a nano technique.

## Revendications

1. Crépine (1), se composant d'une pluralité de disques filtrants (3) fabriqués à partir d'une matière synthétique, de forme annulaire, enfilés sur des tiges de traction (2) s'étendant dans la direction axiale de la crépine (1), **caractérisée en ce que** les disques filtrants (3) sont fabriqués à partir du styrène-acrylonitrile (SAN) transparent.

2. Crépine selon la revendication 1, **caractérisée en ce que** les disques filtrants (3) sont fabriqués lors d'un procédé de moulage par injection.

3. Crépine selon la revendication 1 ou 2, **caractérisée en ce que** les disques filtrants (3) sont pourvus d'une surface particulièrement lisse grâce à des méthodes connues et appropriées, par exemple grâce à la nanotechnologie.
